# EUROPEAN PATENT APPLICATION

(11) **EP 4 848 181 A1**
(43) Date of publication of application: **02.12.2026**
(21) Application number: 26177513.4
(22) Date of filing: 08.05.2026
(51) Int. Cl.: G06Q 20/20, G06Q 20/18, G07F 9/02, G07G 3/00

(54) **MANAGEMENT METHOD AND DEVICE FOR VENDING SYSTEM, AND STORAGE MEDIUM**

(30) Priority: 28.05.2025 CN 202510702030
(71) Applicant: Guangdong Hanmo Technology Corporation Limited, Dongguan City Guangdong 523000 (CN)
(72) Inventor: WU, Lilin, Dongguan City, 523000 (CN)
(74) Representative: Metida

(57) **Abstract**

The present application discloses a management method and device for a vending system, and a storage medium. The present application relates to the technical field of a general control system. The management method for the vending system includes: determining the quantity of products in response to a first step value of an encoder in a shelf pusher; acquiring a first user feature that triggers the encoder based on an image acquisition module of the shelf pusher; encapsulating the quantity of products, the first user feature and a product identifier associated with the shelf pusher into sales data, and sending the sales data to a settlement terminal; acquiring a second user feature in response to a leaving target detected by a security door; and sending alarm information if at least one target sales data associated with a user corresponding to the second user feature is unsettled.

## Description

### TECHNICAL FIELD

The present application relates to the technical field of a general control system, and in particular, to a management method and device for a vending system, and a storage medium.

### BACKGROUND

In supermarkets, settlement is performed by users uploading product barcodes independently or by salesclerks scanning product barcodes. Specifically, after selecting products, customers scan product barcodes through settlement devices in the supermarket or their personal mobile terminals. The system can quickly identify the products, add them to a shopping list, and calculate the total price. Then the customers leave the supermarket after settlement.

However, this method also has certain limitations. For example, if a customer leaves the supermarket without settling, how many products the customer has failed to settle cannot be accurately known.

### SUMMARY

A main objective of the present application is to provide a management method and device for a vending system, and a storage medium, so as to solve the technical problem that if a customer leaves the supermarket without settling, how many products the customer has failed to settle cannot be accurately known.

To achieve the above objective, the present application provides a management method for a vending system. The vending system includes a shelf pusher and a settlement terminal. The management method for the vending system includes:
determining the quantity of products in response to a first step value of an encoder in the shelf pusher;
acquiring a first user feature that triggers the encoder based on an image acquisition module of the shelf pusher;
encapsulating the quantity of products, the first user feature and a product identifier associated with the shelf pusher into sales data, and sending the sales data to a settlement terminal;
acquiring a second user feature in response to a leaving target detected by a security door; and
sending alarm information if at least one target sales data associated with a user corresponding to the second user feature is unsettled.

In one embodiment, the step of determining the quantity of products in response to the first step value of the encoder in the shelf pusher includes:
establishing a corresponding relationship between an encoder step value and the quantity of products based on mechanical structure parameters of the shelf pusher, a product placement rule and an encoder precision; and
receiving the first step value of the encoder, and determining the quantity of products according to the corresponding relationship, where the quantity of products is calculated through linear interpolation if the first step value is between two adjacent step values.

In one embodiment, the step of acquiring the first user feature that triggers the encoder based on an image acquisition module of the shelf pusher includes:
sending a trigger signal to the image acquisition module if the first step value is detected;
receiving, by the image acquisition module, the trigger signal, performing image capture on a preset area of the shelf pusher, and determining an initial image, where the preset area is set as a range from which a user takes away products; and
extracting a user facial feature from the initial image to serve as the first user feature.

In one embodiment, the vending system further includes a general-purpose image acquisition apparatus, and after the step of extracting the user facial feature from the initial image to serve as the first user feature, the method includes:
acquiring a first body posture feature and a first clothing feature if the user facial feature is missing;
invoking the general-purpose image acquisition apparatus to acquire a second body posture feature and a second clothing feature of the preset area; and
concatenating the first body posture feature, the first clothing feature, the second body posture feature and the second clothing feature into the first user feature.

In one embodiment, the step of encapsulating the quantity of products, the first user feature and the product identifier associated with the shelf pusher into the sales data, and sending the sales data to the settlement terminal includes:
associating the quantity of products and the product identifier as product data according to a preset data format;
concatenating the product data and the first user feature as a data body of the sales data;
adding a data header including a data type and a timestamp to the data body; and
sending the encapsulated sales data to the settlement terminal through a communication module.

In one embodiment, after the step of encapsulating the quantity of products, the first user feature and the product identifier associated with the shelf pusher into the sales data, and sending the sales data to the settlement terminal, the method includes:
acquiring a second user feature in response to a trigger operation of the settlement terminal; and
generating and displaying a settlement interface for a user to settle based on at least one target sales data matched with the second user feature, where the step of acquiring the second user feature in response to the trigger operation of the settlement terminal includes:
   invoking a feature acquisition module of the settlement terminal if detecting a user trigger operation by the settlement terminal;
   performing image acquisition on a settlement area based on the feature acquisition module to acquire a user image; and
   extracting a user facial feature point based on the user image to generate the second user feature.

In one embodiment, after the step of extracting the user facial feature point based on the user image to generate the second user feature, the method includes:
extracting a third body posture feature and a third clothing feature if a face corresponding to the user image is occluded or blurred; and
concatenating the third body posture feature and the third clothing feature into the second user feature.

In one embodiment, the step of generating and displaying the settlement interface for the user to settle based on the at least one target sales data matched with the second user feature includes:
comparing the second user feature with the first user feature stored in the sales data one by one to determine the similarity between the second user feature and each piece of the sales data;
screening out the sales data with the similarity higher than a similarity threshold, and determining the sales data as target sales data;
summarizing the quantity and corresponding price of each type of products in the target sales data to acquire a summarized result;
generating the settlement interface according to the summarized result and based on a preset interface template; and
displaying the settlement interface on a display module of the settlement terminal for a user to settle.

In addition, to achieve the above objective, the present application further provides a management device for a vending system. The management device for the vending system includes: a memory, a processor, and a computer program stored in the memory and capable of running on the processor, where the computer program is configured to implement the steps of the above management method for the vending system.

In addition, to achieve the above objective, the present application further provides a storage medium. The storage medium is a computer-readable storage medium, the computer-readable storage medium stores a program for implementing the above management method for the vending system, and the program for implementing the above management method for the vending system is executed by a processor so as to implement the steps of the above management method for the vending system.

The present application provides a management method for a vending system, including: determining the quantity of products in response to a first step value of an encoder in a shelf pusher; acquiring a first user feature that triggers the encoder based on an image acquisition module of the shelf pusher; encapsulating the quantity of products, the first user feature and a product identifier associated with the shelf pusher into sales data, and sending the sales data to a settlement terminal; acquiring a second user feature in response to a trigger operation of the settlement terminal; and generating and displaying a settlement interface for a user to settle based on at least one target sales data matched with the second user feature. The technical problem that barcode damage or a poor scanning environment may lead to scanning failure and the influence on the settlement efficiency is solved, so that the technical effect of improving the payment efficiency of users in supermarkets is achieved.

### BRIEF DESCRIPTION OF THE DRAWINGS

The accompanying drawings, which are incorporated in and constitute a part of this specification, illustrate embodiments consistent with the present application and, together with the description, serve to explain the principles of the present application.

To describe the technical solutions in the embodiments of the present application or in the prior art more clearly, the following briefly introduces the accompanying drawings for describing the embodiments or the prior art. Apparently, those of ordinary skill in the art may still derive other drawings from the accompanying drawings without creative efforts.
FIG. 1 is a schematic flowchart of Embodiment 1 of a management method for a vending system according to the present application;
FIG. 2 is a schematic flowchart of Embodiment 3 of a management method for a vending system according to the present application;
FIG. 3 is a schematic flowchart of Embodiment 6 of a management method for a vending system according to the present application; and
FIG. 4 is a schematic structural diagram of hardware of a management device for a vending system according to the present application.

The objective implementation, functional features and advantages of the present application are further illustrated in combination with embodiments and with reference to the accompanying drawings.

### DETAILED DESCRIPTION OF THE EMBODIMENTS

It should be understood that the specific embodiments described herein are merely used to explain the technical solution of the present application, but are not intended to limit the present application.

To better understand the technical solution of the present application, a detailed description will be given below with reference to the drawings and specific embodiments.

At present, barcode damage or a poor scanning environment may lead to scanning failure and the influence on the settlement efficiency.

The main solution of the present application is: the quantity of products is determined in response to a first step value of an encoder in a shelf pusher; a first user feature that triggers the encoder is acquired based on an image acquisition module of the shelf pusher; the quantity of products, the first user feature and a product identifier associated with the shelf pusher are encapsulated into sales data, and the sales data is sent to a settlement terminal; a second user feature is acquired in response to a trigger operation of the settlement terminal; and a settlement interface is generated and displayed for a user to settle based on at least one target sales data matched with the second user feature, thereby achieving the technical effect of improving the payment efficiency of users in supermarkets.

It should be noted that an executive subject of this embodiment may be a vending system, a computing service device with data processing, network communication and program running functions, such as a tablet computer, a personal computer and a mobile phone, or a management device for a vending system, capable of achieving the above functions, and this embodiment does not specifically limit this. This embodiment and the following embodiments are described by taking the case where the vending system is the executive subject as an example.

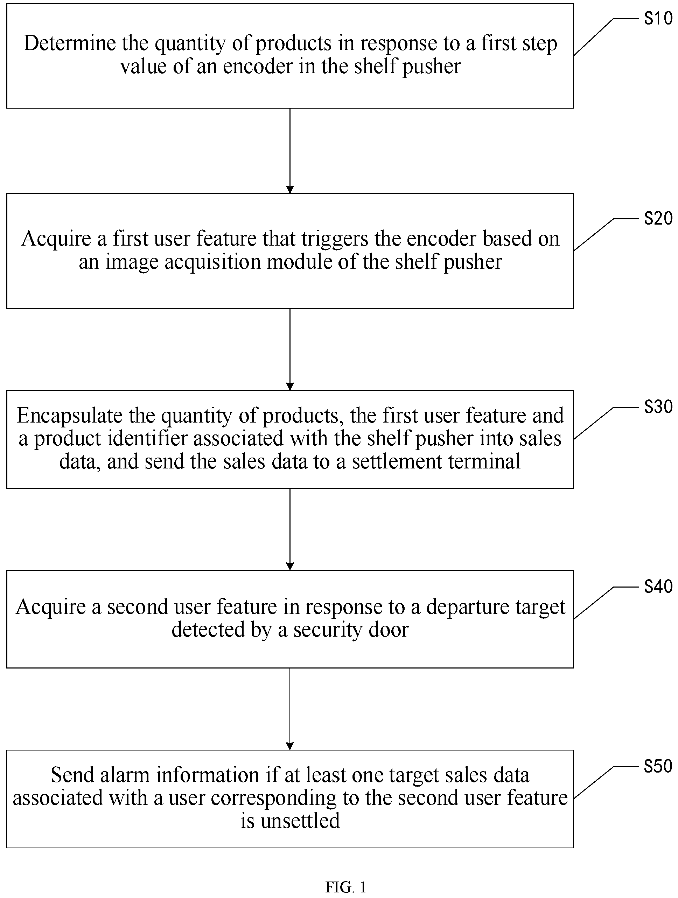

Based on this, the present application provides a management method for a vending system according to a first embodiment. The vending system includes a shelf pusher and a settlement terminal. Referring to FIG. 1, the management method for the vending system includes steps S10 to S50.

Step S10: the quantity of products is determined in response to a first step value of an encoder in the shelf pusher.

In this embodiment, the encoder is a sensor mounted on a transmission mechanism of the shelf pusher, and is configured to record a displacement variation of the shelf pusher; and the shelf pusher is a mechanical apparatus for automatically pushing products to a pickup port, and usually includes a conveyor belt, a gear set and the like.

As an optional embodiment, the system establishes a corresponding relationship table between an encoder step value and the quantity of products in advance through mechanical parameter calibration and an actual test. When a user removes a product from a shelf, the shelf pusher moves forward as the quantity of products decreases, and the encoder generates a corresponding step value signal. After receiving the signal, the system queries the corresponding relationship table first. If the step value is within a preset interval, the corresponding product quantity is directly matched; and if the step value is between two intervals, the quantity of products is calculated by a linear interpolation algorithm, and the result is subjected to non-negative integer and inventory upper limit verification.

Exemplarily, every 10 step values of the encoder on a beverage shelf correspond to the displacement of one bottle of beverage. When a user takes away two bottles of beverage, the encoder generates 22 step values, the system calculates (22-20)/(30-20)×1+2=2.2 through linear interpolation, and the value is rounded down to two bottles after verification. In this embodiment, the displacement variation of the shelf pusher is acquired in real time by the encoder, and the quantity of products is accurately calculated in combination with a preset corresponding relationship, thereby providing a fundamental quantitative basis for the generation of subsequent sales data.

Step S20: a first user feature that triggers the encoder is acquired based on an image acquisition module of the shelf pusher.

In this embodiment, the image acquisition module is a camera assembly integrated above or beside the shelf pusher, and is configured to capture an image of a pickup area; and the user feature includes, but is not limited to, visual information capable of being used to distinguish user identity, such as a facial feature, a body posture feature and a clothing feature. As an optional embodiment, when the encoder detects a change in the step value (that is, the product is taken away), a trigger signal is sent to the image acquisition module immediately. After receiving the signal, the image acquisition module starts capturing within 200 ms to perform image acquisition on an area with 1.5 m in front of the shelf, and then performs preprocessing, such as denoising and brightness adjustment, on the original image. Subsequently, a user subject in the image is identified by a target detection algorithm, and feature information, such as facial keypoint coordinates and clothing color and texture, is extracted.

Exemplarily, when a user A takes a bag of potato chips from the shelf, the encoder triggers the image acquisition module, the camera captures the back view of the user A wearing a blue coat, and the system extracts body posture features, such as a coat color and a height ratio, as the first user feature. In this embodiment, the visual features of the user taking the product are recorded in real time by the image acquisition module, and a correlation between a user behavior and a physical feature is established, thereby providing data support for user identity matching during subsequent settlement.

Step S30: the quantity of products, the first user feature and a product identifier associated with the shelf pusher are encapsulated into sales data, and the sales data is sent to a settlement terminal.

In this embodiment, the product identifier is a code for uniquely identifying a product, such as information in a barcode, a quick response (QR) code or an RFID tag; and the sales data is a structured data set including product information, user features and transaction-associated data. As an optional embodiment, the system encapsulates the data in a JSON format, integrates the quantity of products, the first user feature (such as a facial feature vector) and the product identifier (such as a barcode character string) into a data body, adds a data header including a data type (sales data) and a timestamp (accurate to millisecond), and sends the data to the settlement terminal through a wireless communication protocol such as Wi-Fi or Bluetooth. a timeout retransmission mechanism is started after sending. If an acknowledgement signal is not received within 3 s, the data is sent again, up to a maximum of 3 retransmissions. Exemplarily, when a user takes away two bottles of spring water with the barcode 6901234567890, the system encapsulates the quantity of products "2", the user feature "facial feature vector V1" and the product identifier "6901234567890" into JSON data, and sends the data to the settlement terminal through Wi-Fi. This embodiment ensures that pickup information is synchronized to the settlement terminal in real time and accurately through standardized data encapsulation and a reliable transmission mechanism, thereby providing a complete data source for the subsequent settlement process.

Step S40: a second user feature is acquired in response to a departure target detected by a security door.

In this embodiment, the security door is a device arranged at a supermarket exit, and is configured to acquire features of people leaving the supermarket. The departure target refers to a person leaving the supermarket. The second user feature refers to a user feature acquired by the security door for the departure target.

Step S50: alarm information is sent if at least one target sales data associated with a user corresponding to the second user feature is unsettled.

In this embodiment, a matched first user feature is determined according to the second user feature, and the sales data associated with the first user feature is acquired. If the unsettled sales data is present, the unsettled sales data is determined as the target sales data. The alarm information is output based on the target sales data to remind security personnel for inspection.

Optionally, after Step S30, the method includes:
Step S60: a second user feature is acquired in response to a trigger operation of the settlement terminal.

In this embodiment, the settlement terminal is a device for a user to perform a settlement operation, and usually includes a touchscreen, a camera and a payment module; and the trigger operation includes interactive behaviors, for example, a user clicking a "start settlement" button, and sending that the user has stayed in a settlement area for more than 5 s.

As an optional embodiment, when the settlement terminal detects the trigger operation, a built-in camera is started instantly to perform image acquisition on the settlement area, with an acquisition resolution of 1920×1080 and a frame rate of 30 fps. The system performs face detection on the acquired images, and 68 facial keypoint features are extracted if a clear face is detected; and if the face is occluded, auxiliary features such as a clothing color and a hairstyle are extracted, and feature data is normalized and converted into feature vectors with uniform dimensions. Exemplarily, when a user stands in front of the settlement terminal and clicks a "settlement" button, the terminal camera captures a frontal image of the user, and the system extracts facial features of the user, such as left-eye pupil coordinates and a nose bridge height, to generate a second user feature vector F2. In this embodiment, the settlement terminal acquires feature information of a current user in real time, and a real-time correlation between a settlement behavior and a user feature is established, thereby providing a key comparison basis for subsequent sales data matching.

Step S70: a settlement interface is generated and displayed for a user to settle based on at least one target sales data matched with the second user feature.

In this embodiment, the target sales data refers to a historical pickup record matched with the feature of the current settlement user; and the settlement interface is an interactive interface showing information of a product purchased by the user and payment options.

As an optional embodiment, the system performs a cosine similarity calculation on the second user feature and the first user feature in all unsettled sales data, sets a threshold of 0.8, and screens out sales data with a similarity higher than the threshold. A plurality of matched sales data are summarized, the quantities are consolidated according to a product category, a total price is calculated, and a settlement interface including a product name, a picture, a unit price, a quantity, a total price and a payment mode (WeChat Pay, Alipay and cash) is generated according to a preset template and displayed on a screen of the settlement terminal.

Exemplarily, the similarity between the second user feature F2 of the user A and the first user feature V1 acquired in Step S20 is 0.85, the system matches the sales data indicating that two bottles of spring water and one bag of potato chips are taken away, a settlement interface with a total price of 15 yuan is generated after summarization, and the user clicks Alipay to complete the settlement. In this embodiment, a pickup record of the user is associated with a settlement behavior accurately by a feature matching algorithm, and a settlement interface including complete product information is automatically generated, so that a self-service settlement closed loop in unattended scenarios is achieved, the problem of "difficult traceability of unsettled products" in the traditional solution is solved, and the loss prevention ability of the system and the settlement efficiency of the user are improved.

As an example of a manned supermarket, when a user enters the supermarket, a user image or clothing feature of the user is acquired, and a first user feature of the user is established. When the user takes a product from a shelf pusher, the shelf pusher invokes an image acquisition module to acquire a user image so as to acquire the first user feature and encapsulate the quantity of products and a product identifier into sales data to be associated with the first user feature. Each time the user takes the product from the shelf pusher, the same operation as described above is performed. When the user goes to the settlement terminal for settlement, the staff controls the settlement terminal to acquire the user image so as to extract a second user feature. Then, target sales data is acquired through the matching of the second user feature, so that a settlement interface is generated for the user to pay and settle.

Further, the staff can also control the settlement terminal to scan any product identifier and then acquire sales data associated with the product identifier, so that the first user feature associated with the sales data, and all sales data, that is, the target sales data, associated with the first user feature is acquired. In this way, according to the target sales data, a settlement interface is generated for the user to pay and settle.

Optionally, the vending system further includes an alarm apparatus. After Step S30, the method includes: an image acquisition module is arranged at an exit of a security door of the supermarket, and a second user feature of a user is acquired if it is detected that the user leaves from the security door. Target sales data associated with the second user feature is acquired, and whether the target sales data are settled is determined. If the target sales data are unsettled, alarm information is generated based on the unsettled target sales data and is sent to a terminal of the staff through the alarm apparatus, thereby reminding the staff that unsettled products are present. Therefore, the technical effect of theft prevention in the supermarket is achieved.

Optionally, the vending system further includes an alarm apparatus. After Step S70, the method includes: settlement information of a user is acquired; and if the settlement information is not matched with the target sales data, alarm information is generated based on the alarm apparatus to remind the staff for check.

According to the present application, the quantity of products is determined in response to a first step value of an encoder in the shelf pusher; a first user feature that triggers the encoder is acquired based on an image acquisition module of the shelf pusher; the quantity of products, the first user feature and a product identifier associated with the shelf pusher are encapsulated into sales data, and the sales data is sent to a settlement terminal; a second user feature is acquired in response to a trigger operation of the settlement terminal; and a settlement interface is generated and displayed for a user to settle based on at least one target sales data matched with the second user feature. The technical problem that barcode damage or a poor scanning environment may lead to scanning failure and the influence on the settlement efficiency is solved, so that the technical effect of improving the payment efficiency of users in supermarkets is achieved.

Based on Embodiment 1, in Embodiment 2 of the present application, Step S10 includes:
Step S11: a corresponding relationship between an encoder step value and the quantity of products is established based on mechanical structure parameters of the shelf pusher, a product placement rule and an encoder precision; and
Step S12: the first step value of the encoder is received, and the quantity of products is determined according to the corresponding relationship, where the quantity of products is calculated through linear interpolation if the first step value is between two adjacent step values.

In this embodiment, the mechanical structure parameters of the shelf pusher refer to physical parameters inside the shelf pusher, such as a conveyor belt length, a gear diameter and a transmission ratio, which determine the operation displacement; the product placement rule is a placement mode of products on the shelf, such as the quantity of rows and columns of products placed on each shelf layer, and a spacing between the products; and the encoder precision represents a minimum displacement variation that can be distinguished by the encoder, and is usually measured by the quantity of step values per unit displacement.

As an optional embodiment, the shelf pusher is disassembled and analyzed first, the mechanical structure parameters are measured and recorded; meanwhile, rules of products placed on the shelf are counted, for example, each layer of the shelf has 5 columns of products and the spacing between the products is 5 cm. Then, the encoder precision is acquired according to the product manual of the encoder, for example, 1 centimeter of displacement corresponds to 100 step values. Through theoretical calculation and in combination with multiple practical tests, the encoder step values at different displacements and the corresponding quantities of pushed products are recorded, and a corresponding relationship table is established. When the system receives a first step value from the encoder, a query is performed in the corresponding relationship table first, and the corresponding product quantity is directly acquired if the step value is completely matched with a record in the table. If the step value is between two adjacent step values, for example, the step value 1000 in the record corresponds to one product, the step value 2000 corresponds to two products, and the current step value is 1500, the quantity of products is determined by a linear interpolation formula: (the current step value-the smaller step value)/(the larger step value-the smaller step value)×(the quantity of products corresponding to the larger step value-the quantity of products corresponding to the smaller step value)+the quantity of products corresponding to the smaller step value, that is, (1500-1000)/(2000-1000)×(2-1)+1=1.5, and then by rounding according to the actual situation.

Exemplarily, for a certain snack shelf, each 10-centimeter movement of the conveyor belt of the pusher enables one product to move forward. The encoder has a precision of 50 step values per centimeter. Through tests, when the encoder generates 500 step values, one product is pushed correspondingly; and when 1000 step values are generated, two products are pushed correspondingly. On one occasion, the system receives 750 step values from the encoder, which is between 500 and 1000. Through linear interpolation calculation: (750-500)/(1000-500)×(2-1)+1 = 1.5, rounding is performed to acquire 1 product.

In this embodiment, the quantity of products taken by the user can be accurately determined by establishing an accurate corresponding relationship and in combination with a reasonable calculation method, thereby providing core basic data for the subsequent accurate generation of the sales data, and ensuring the reliability of the quantity of products counting link in the whole management method for the vending system.

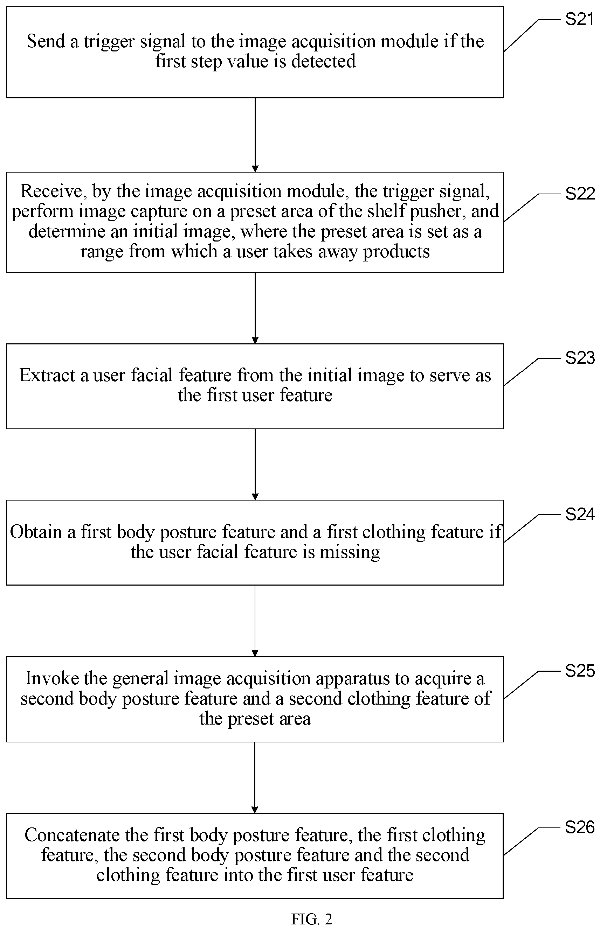

Based on any one of the above embodiments, in Embodiment 3 of the present application, referring to FIG. 2, Step S20 includes:
Step S21: a trigger signal is sent to the image acquisition module if the first step value is detected.

In this embodiment, the first step value refers to a value generated by the encoder due to the displacement change of the shelf pusher caused by the user taking away the product. The image acquisition module usually includes a camera and a matched image acquisition circuit thereof, and is configured to acquire a visual image.

As an optional embodiment, the system uses a dedicated monitoring program to poll and read the value of the encoder at fixed time intervals (for example, every 10 milliseconds). Once a change in the value of the encoder is detected and the variation falls within a preset minimum step value variation range caused by product pickup, it is immediately determined that the first step value is detected. Then, a preset trigger signal code (such as binary code "10101010") is sent by a pre-configured hardware communication interface such as an RS485 bus, and the signal is transmitted to a signal receiving end of the image acquisition module through the bus.

Exemplarily, on a snack shelf of a certain unmanned supermarket, the value of the encoder is constant in a normal state. When a user takes away a bag of potato chips, the encoder generates a change of 30 step values. After monitoring the change, the system identifies the change meets the step value change condition caused by product pickup, and sends the trigger signal code "10101010" to the image acquisition module mounted above the shelf through the RS485 bus.

In this step, a start instruction is provided for the subsequent image acquisition through accurate monitoring and a timely signal sending mechanism, thereby ensuring the accurate capture of the moment when the user takes the product and laying the foundation for the user feature extraction.

Step S22: the image acquisition module receives the trigger signal, performs image capture on a preset area of the shelf pusher, and determines an initial image, where the preset area is set as a range from which a user takes away products.

In this embodiment, the preset area is a preset spatial range predefined around the shelf pusher, and aims to ensure that an image of the user who takes away the product can be captured. The initial image is an unprocessed original image captured by the image acquisition module after the trigger signal is received.

As an optional embodiment, once a signal receiving circuit of the image acquisition module receives the trigger signal code, an internal image acquisition process is started immediately. The camera performs image capture on a hemispherical area centered at a front end of the shelf pusher and with a radius of 1.5 m forward according to preset parameters, for example, a resolution set to 1920×1080 pixels and a frame rate set to 30 frames per second. An image sensor converts an optical signal into an electrical signal, and initial image data is generated through analog-to-digital conversion and data processing and is temporarily stored in a buffer area of the image acquisition module.

Exemplarily, at the snack shelf of the unmanned supermarket, after the image acquisition module receives the trigger signal, the camera is started quickly to capture the preset area. In a well-lit environment, a clear image of the upper body of a user who takes away the potato chips is captured successfully, and the image data is stored in the buffer area and becomes an initial image for the subsequent processing.

This step ensures that at the moment the user picks up the product, the image acquisition module can respond quickly and accurately capture an image of the area where the user is and acquire original data to provide a material for extracting the user feature.

Step S23: a user facial feature is extracted from the initial image to serve as the first user feature.

In this embodiment, the user facial feature includes feature information for identifying or distinguishing users, such as a facial contour, the positions and shapes of five facial features, and a facial texture.

As an optional embodiment, the image acquisition module transmits the initial image in the buffer area to an image processing unit at a back end. The image processing unit first scans the initial image by a Haar feature-based cascade classifier algorithm, thereby rapidly positioning a face area in the image. If a face is detected, a face area image is input into a convolutional neural network (CNN) model trained by a large amount of face data. The model outputs 68 facial keypoint coordinates, including feature point position information of the eyes, nose, mouth and the like. Meanwhile, the contour curve of the face area is digitally described, the facial feature point data and the contour curve information are integrated to generate a first user feature vector, and the first user feature is stored in a user feature database of the system.

Exemplarily, for the initial image captured in the unmanned supermarket, the image processing unit uses a Haar cascade classifier to position the face of the user. Facial feature information, such as an eye spacing, an eyebrow shape, a nasal bridge height and a mouth corner angle, of the user is extracted through CNN model analysis to generate the corresponding first user feature vector. The first user feature vector is stored in the database to provide key data support for the subsequent settlement matching and other operations.

In this step, the user facial feature is accurately acquired from the initial image through an advanced image identification and feature extraction technology, thereby providing core data for user behavior tracing and settlement identity matching in the whole management method for the vending system, and improving the safety and accuracy of the system in unmanned vending scenarios.

Optionally, after Step S23, the method includes:
Step S24: a first body posture feature and a first clothing feature are acquired if the user facial feature is missing.

In this embodiment, the user facial feature missing means that when the facial feature is extracted from the initial image by a predetermined algorithm, no face is detected or key facial parts are severely occluded or blurred, resulting in the inability to acquire valid facial feature data. The first body posture feature is a user body posture-related feature extracted from the initial image, such as an approximate height proportion and a limb extension status. The first clothing feature refers to a feature of user's clothes acquired from the initial image, such as the color, style and pattern of the clothes.

As an optional embodiment, after the user facial feature is extracted from the initial image, the system automatically determines the validity of the extraction result. If the quantity of the facial keypoint coordinates returned by the facial feature extraction algorithm is less than a preset threshold (for example, less than 30 keypoints), or a face area identification confidence is less than a set value (such as 0.6), it is determined that the user facial feature is missing. At this time, the initial image is subjected to secondary analysis by an image identification algorithm, body contour keypoints of the user are identified by a body posture estimation model, and a proportional relationship of various body parts is calculated to acquire a first body posture feature; meanwhile, the color distribution and the pattern texture of the clothing area of the user are analyzed by a color identification algorithm and an image segmentation technology, and the first clothing feature is extracted.

Exemplarily, in an unmanned convenience store, when the user takes away the product, a sufficient facial feature cannot be extracted successfully from the initial image by the Haar cascade classifier and the CNN model because the user's face is severely occluded by a cap and a mask. After the system determines that the facial feature is missing, the upright body posture of the user, the naturally dangling limbs and the ratio of the body height to the shelf height of about 3:4 are identified by the body posture estimation model, so that the first body posture feature is acquired; and It is determined by color identification and image segmentation that the user is wearing a blue hoodie with a white circular pattern on the front, thereby acquiring the first clothing feature.

In this step, when the facial feature is missing, user-related feature information is supplemented by other feature extraction methods, thereby providing multi-dimensional data for accurately identifying users.

Step S25: the general-purpose image acquisition apparatus is invoked to acquire a second body posture feature and a second clothing feature of the preset area.

In this embodiment, the general-purpose image acquisition apparatus is a device mounted in the supermarket and configured to assist in acquiring a user-related feature, can compensate the limitation of information acquired by the image acquisition module of the shelf pusher, and generally has the characteristics of different capture angles and higher resolution. The second body posture feature is a user body posture feature extracted from the image acquired by the general-purpose image acquisition apparatus from the preset area. The second clothing feature is a user clothing-related feature acquired after the general-purpose image acquisition apparatus acquires the image.

As an optional embodiment, when it is determined that the user facial feature is missing and the first body posture and clothing features are extracted, the system sends an acquisition instruction to the general-purpose image acquisition apparatus through a network communication protocol (such as a TCP/IP). After the general-purpose image acquisition apparatus receives the instruction, capture parameters (such as a focal distance and exposure) are adjusted, and image acquisition is performed on the preset area of the shelf pusher. After the acquisition is completed, the image is transmitted back to the system. The system uses an algorithm similar to that for extracting the first body posture and clothing features to extract body posture details of the user (such as a leg bending angle and an arm swinging amplitude) as a second body posture feature, and more clothing detail features (such as a clothing material texture and a cuff/collar style) as a second clothing feature.

Exemplarily, in the unmanned convenience store, the system invokes a high-definition general-purpose image acquisition apparatus mounted at a ceiling corner, and adjusts the focal distance to capture the pickup area after the apparatus receives the instruction. The system analyzes from the acquired image that the user is standing with legs slightly apart and arms holding a shopping basket, thereby acquiring the second body posture feature; meanwhile, the system identifies that the user's blue hoodie is made of cotton and has white ribbed edges on the cuffs, thereby acquiring the second clothing feature.

In this step, user feature information from more angles and with more details is acquired by virtue of the general-purpose image acquisition apparatus, thereby enriching a user feature data set and improving the user identification accuracy.

Step S26: the first body posture feature, the first clothing feature, the second body posture feature and the second clothing feature are concatenated into the first user feature.

In this embodiment, concatenation means that body posture and clothing feature data from different sources are integrated into a complete user feature set so as to be subsequently used for user identity identification and behavior tracing.

As an optional embodiment, the system performs data fusion on the first body posture feature and the first clothing feature acquired previously as well as the second body posture feature and the second clothing feature acquired newly. First, various types of feature data are standardized to unify data formats and dimensions. Then, the standardized feature data is arranged and combined sequentially according to a preset feature concatenation rule to form a vector including a multi-dimensional user feature, and the vector serves as a complete first user feature and is stored in the user feature database of the system.

Exemplarily, after the first body posture and clothing features acquired previously, such as a user height proportion and clothing color and pattern, as well as the second body posture and clothing features acquired newly, such as a body posture detail and a clothing material texture, are standardized, the features are concatenated into a vector including a plurality of feature values according to a rule that the body posture features precede the clothing features and the same type of features are sorted by descending importance, for example [a body height proportion value, a limb action value, a clothing color value, a material texture value, ...], and the vector is stored in the database.

In this step, multi-source feature data is integrated to construct a more comprehensive user feature model, thereby providing richer and more accurate data support for user behavior tracing and settlement identity matching in the whole management method for the vending system, and further improving the safety and reliability of the system in unmanned vending scenarios.

Based on any one of the above embodiments, in Embodiment 4 of the present application, Step S30 includes:
Step S31: the quantity of products and the product identifier are associated as product data according to a preset data format.

In this embodiment, the preset data format refers to a structural form predefined by the system for standardizing data organization and storage, such as common formats like JSON and XML, and is intended to ensure the consistency and readability when data is transmitted and processed among different modules. The product quantity is a quantity of products taken by the user, which is determined by the step value of the encoder. The product identifier is a code capable of uniquely determining information such as a product type and specification, such as a digital/character code corresponding to a barcode and a QR code, or product identifier information stored in an RFID tag. The product data is a data set that integrates the quantity of products and the product identifier according to the preset format, and is used to describe basic information of the product taken by the user.

As an optional embodiment, the system uses the JSON format to construct product data. After the quantity of products and the product identifier are acquired, a JSON object is created. In the object, the quantity of products is used as a value in a key-value pair, with the key name "quantity"; and the product identifier is used as a value in another key-value pair, with the key name "product_id". For example, if the quantity of products is 3 and the product identifier is "6901234567890", the constructed product data with the JSON format is {"quantity":3,"product_id":"6901234567890"}.

Exemplarily, in a certain unmanned supermarket, a user takes away 5 bottles of spring water with the barcode "6951234567891". After the system acquires the quantity of products 5 and the product identifier "6951234567891", the product data is constructed according to the JSON format, that is, {"quantity":5,"product_id":"6951234567891"}.

Step S32: the product data and the first user feature are concatenated as a data body of the sales data.

In this embodiment, the first user feature is an information set that is acquired, processed and extracted by the image acquisition module and used for describing the features of the user who takes away the product, such as a facial feature vector, body posture feature data and clothing feature data. The data body of the sales data is a part of the sales data including actual business information, formed by combining the product data and the first user feature, and used to comprehensively record product and user related information involved in a sales transaction.

As an optional embodiment, data concatenation is also performed based on the JSON format. Based on the product data JSON object constructed previously, a key-value pair is added, with the key name "user_features", and the value thereof is the first user feature data. If the first user feature is stored in a vector form, for example, the facial feature vector is [0.123,0.456,0.789...], the data body JSON object of the concatenated sales data is {"quantity":3,"product_id":"6901234567890","user_features":[0.123,0.456,0.789,......]}. If the first user feature includes various types (such as body posture and clothing features), the value of the "user_features" can be further constructed as a sub-JSON object to store different types of feature data, respectively.

Exemplarily, for the user who previously took away 5 bottles of spring water, the first user feature is extracted as a facial feature vector [0.234,0.567,0.891,...]. The system concatenates the previously constructed product data {"quantity":5,"product_id":"6951234567891"} with the facial feature vector to acquire the data body of the sales data: {"quantity":5,"product_id":"6951234567891","user_features":[0.234,0.567,0.891,..]}.

In this step, the product information and the user feature are combined to form a data body including rich sales behavior information.

Step S33: a data header including a data type and a timestamp is added to the data body.

In this embodiment, the data header is a section of data with a preset format and added before the data body, and is used to describe some basic attributes of the data, so that the receiving end can correctly parse and process the data conveniently. The data type specifies a business type represented by the data, for example, "sale_data" represents sales data, so that the receiving end can adopt corresponding processing logic based on the data type. The timestamp is a value that records data generation time, usually in milliseconds or seconds, accurate to the moment of data generation. The timestamp is used to mark the chronological order of sales behaviors, thereby facilitating the subsequent data sorting, statistics and analysis.

As an optional embodiment, a new JSON object is created as a data header. In the object, a "data_type" key is set and has a value of "sale_data" to indicate the data type; and a "timestamp" key is set and has a value being the millisecond count of the current system time, and is acquired by invoking a time acquisition function of the system (for example, the millisecond count of the current time is acquired by using time.time()*1000 in Python). Then, the data header JSON object is combined with the data body of the sales data constructed previously. The data header and the data body can be respectively serialized into character strings, and then are concatenated according to a preset protocol format (for example, in the HTTP, the data header comes first, followed by the data body, separated by a preset delimiter).

Exemplarily, assuming that the millisecond count of the current system time is 1678954321000, the constructed data header JSON object is {"data_type":"sale_data","timestamp":1678954321000}. The constructed data header JSON object and the data body {"quantity":5,"product_id":"6951234567891","user_features":[0.234,0.567,0.891,...]} of the previous sales data of taking away the spring water are concatenated according to the preset protocol format to form a complete data structure to be sent.

In this step, key attribute information is given to the sales data by adding the data header, so that the settlement terminal can accurately identify the data type and the data generation time, thereby facilitating the subsequent data processing and management.

Step S34: the encapsulated sales data is sent to the settlement terminal through a communication module.

In this embodiment, a wireless communication module is a hardware device with a wireless communication function, such as a Wi-Fi module, a Bluetooth module and a 4G/5G communication module, and is configured to achieve wireless data transmission between different devices. The settlement terminal is a device for a user to perform a product settlement operation, and usually has the functions of data receiving, display and payment processing.

As an optional embodiment, the Wi-Fi module is selected as the wireless communication module. Network parameters of the Wi-Fi module are pre-configured in the system, so that the Wi-Fi module is connected to the same local area network (LAN) as the settlement terminal. After encapsulation of the sales data (including the data header and the data body) is completed, the data is converted into a format suitable for Wi-Fi transmission (for example, encapsulation is performed according to the TCP/IP). The encapsulated sales data is sent to by a specified IP address and port number of the settlement terminal in the LAN by a sending function of the Wi-Fi module. The specified port is monitored when the settlement terminal is started, and parse is performed according to a pre-defined data format once the data is received.

Exemplarily, in an unmanned supermarket, all devices are connected to the LAN with the name "Unmanned_Store_WiFi". The Wi-Fi module in the system encapsulates the encapsulated sales data according to the TCP/IP and sends the data to the port number "8080" of the IP address "192.168.1.100" of the settlement terminal. After monitoring the data of the port, the settlement terminal performs parse to acquire the product data, the user feature, the data type, the timestamp and other information.

This step achieves the wireless transmission of the sales data from a shelf pusher related system to the settlement terminal and ensures that the user pickup information can be transmitted to the settlement process timely and accurately, thereby providing a guarantee for a user to perform the settlement operation smoothly and completing a closed-loop information flow of an unmanned vending system.

Based on any one of the above embodiments, in Embodiment 5 of the present application, Step S40 includes:
Step S41: a feature acquisition module of the settlement terminal is invoked if a user trigger operation is detected by the settlement terminal.

In this embodiment, the settlement terminal is a device for a user to perform a product checkout operation, and usually integrates a display screen, a payment module, a data processing unit and other components. The user trigger operation refers to a behavior performed by the user on the settlement terminal and capable of starting a settlement process, for example, clicking a "start settlement" button on the screen of the settlement terminal, placing a product in a preset sending area to trigger an infrared sensing apparatus, and swiping a membership card. The feature acquisition module is a combination of hardware and software for acquiring a user biological feature or other identifiable features in the settlement terminal, generally includes a camera, image acquisition software and a feature extraction algorithm, and is mainly configured to acquire user images subsequently in this step.

As an optional embodiment, a software system of the settlement terminal continuously monitors a user input port and various sensing apparatuses. When a user clicks the preset "start settlement" button on the screen, the clicking event of the button is captured, and the system determines that the user trigger operation is detected. Then, the system invokes an internal pre-written feature acquisition module start function to activate the hardware device of the feature acquisition module, for example, turning on a power supply of the camera, initialize the image acquisition software to prepare for the subsequent image acquisition.

Exemplarily, on the settlement terminal of an unmanned convenience store, after finishing shopping, a user touches the prominent "start settlement" button on the screen. The software system of the settlement terminal instantly captures the button clicking event, confirms the user trigger operation, and immediately invokes the feature acquisition module start function, and at this time, an indicator light of the camera turns on, indicating that the feature acquisition module has been invoked successfully.

Step S42: image acquisition is performed on a settlement area based on the feature acquisition module to obtain a user image.

In this embodiment, the settlement area refers to a preset spatial range set around the settlement terminal, a user image can be clearly acquired within the range, and the area is usually centered on the settlement terminal and has a radius of 1 to 2 meters. The user image is an image which includes part or all of the user's body and is acquired after the camera in the feature acquisition module captures the settlement area, and is used to extract a user feature subsequently.

As an optional embodiment, after the feature acquisition module is invoked, a built-in camera of the feature acquisition module works according to preset parameters. The camera adjusts the parameters, such as a focal distance, aperture and exposure, so as to adapt to the lighting conditions in the settlement area and ensure that a clear image is captured. The camera performs image acquisition on the settlement area at a preset resolution (such as 1920×1080 pixels) and a frame rate (such as 30 frames per second), an optical signal is converted into an electrical signal, and user image data is generated through analog-to-digital conversion and the preliminary processing of an image processing chip and is stored in a temporary buffer area of the settlement terminal.

Exemplarily, in the above unmanned convenience store, after the feature acquisition module is started, the camera of the settlement terminal automatically adjusts the focal distance and frames the user in the settlement area clearly within the capture range. Under normal indoor light, the camera captures a user image at a resolution of 1920×1080 pixels and a frame rate of 30 frames per second to obtain a clear front half-body image of the user, which is stored in the buffer area of the settlement terminal for subsequent processing.

Step S43: a user facial feature point is extracted based on the user image to generate the second user feature.

In this embodiment, the user facial feature point refers to a key position point capable of representing the user facial feature, such as an eye corner, a pupil center, a nose tip, a nose wing, a mouth corner, a lip peak and other positions, and the coordinate information of these points is identified and extracted from the user image usually by a preset algorithm. The second user feature is a data set extracted from the image acquired when the user is at the settlement terminal and used to match with the user feature during the previous pickup and confirm the user's identity, and is generated mainly based on the facial feature points in this embodiment.

As an optional embodiment, the data processing unit of the settlement terminal reads the user image data from the temporary buffer area. First, the user image is scanned by a Haar feature-based cascade classifier algorithm, thereby rapidly positioning a face area in the image. If a face is detected, a face area image is input into a convolutional neural network (CNN) model trained by a large amount of face data. The model outputs 68 facial keypoint coordinates which represent position information of the user facial feature points. These facial feature point coordinates are sorted and standardized to form a feature vector as a second user feature stored in a user feature storage area of the settlement terminal for matching with the first user feature in the sales data subsequently.

Exemplarily, for the user image captured by the unmanned convenience store, the data processing unit of the settlement terminal positions a user face area through the Haar cascade classifier and inputs the user face area into a CNN model. The model outputs 68 keypoint coordinates of the user's face, such as left pupil center coordinates (x1, y1) and right mouth corner coordinates (x2, y2). After standardization, these coordinate values are combined into a feature vector [0.12,0.34,0.56,...] as the second user feature, and the second user feature is stored and used to compare with the first user feature recorded previously so as to confirm the user identity and associate the sales data.

In this step, facial feature points are accurately acquired from the user image by an advanced image identification and feature extraction technology to generate the second user feature, thereby providing key data for the subsequent sales data matching and user identity confirmation, completing the association process of a user shopping behavior and a settlement behavior in the unmanned vending system, and improving the intelligence and security of the system.

Optionally, after Step S43, the method includes:
Step S44: a third body posture feature and a third clothing feature are extracted if a face corresponding to the user image is occluded or blurred.

In this embodiment, the face corresponding to the user image being occluded or blurred means that in the user image acquired in the settlement area, part or all of the user's face is occluded by a cap, a mask, a scarf or other articles, or the facial image is blurred due to excessively dark and bright lighting and camera shake, so that the facial feature points cannot be extracted accurately. The third body posture feature is feature information related to the user body shape and posture and extracted from the user image, for example, a standing posture of the body (such as upright, bent and sideways, limb extension (whether the arms are lifted and the legs are separated apart), and a proportional relationship of each part of the body height-shoulder width ratio and a head-body ratio). The third clothing feature is a feature acquired from the user image and about the user's clothing, including clothing colors, styles (such as T-shirt, coat and skirt), patterns (print, stripe and plaid) and materials (cotton, linen and leather).

As an optional embodiment, after the facial feature points are extracted based on the user image, the system evaluates the quality of the extraction results first. If the quantity of valid feature points returned by the facial feature point extraction algorithm is less than a preset threshold (such as less than 30), or the definition score of the face area is less than a set value (such as 0.5, calculated by an image definition algorithm), the system determines that the face corresponding to the user image is occluded or blurred. At this time, the user image is analyzed by a human posture estimation algorithm. The body posture of the user is determined by identifying bone joint points of the human body in the image, and an angle and proportion relationship of each part of the body is calculated, so that the third body posture feature is extracted. Meanwhile, the user's clothing is separated from the background by an image segmentation technology, the clothing color is determined by a color identification algorithm, and the clothing pattern and material are identified by a texture analysis algorithm, so that the third clothing feature is extracted.

Exemplarily, in a certain unmanned supermarket, the user is wearing a cap and a mask during settlement, and the face in the user image acquired by the settlement terminal is severely occluded. After evaluating the extraction results of the facial feature points, the system determines that the face is occluded. Then, by the human posture estimation algorithm, that the user is standing slightly sideways with arms crossed over the chest is identified, and the proportional relationship of each part of the body is calculated to acquire the third body posture feature; and by the image segmentation and color identification technology, it is determined that the user is wearing a black hoodie with white letter patterns and made of a cotton material, so that the third clothing feature is extracted.

Step S45: the third body posture feature and the third clothing feature are concatenated into the second user feature.

In this embodiment, concatenation refers to integrating the data of the third body posture feature and the third clothing feature to form a complete data set for representing a current settlement user feature, thereby facilitating the subsequent matching with the first user feature in the sales data and confirmation of the user identity.

As an optional embodiment, the system unifies the data format of the extracted third body posture feature and third clothing feature. For example, the body posture in the third body posture feature is expressed by numerical codes (1 represents upright, 2 represents bent and 3 represents sideways), the limb extension is expressed by angle values, and the body proportional relationship is expressed by decimals; and in the third clothing feature, the clothing color is expressed by an RGB value, the style is expressed by pre-defined codes (T-shirt is T01 and coat is C01), the pattern is expressed by an image feature vector, and the material is expressed by a material code. Then, according to a preset concatenation rule, the third body posture feature data and the third clothing feature data with the unified format are sequentially sorted and combined to form a vector including a multi-dimensional user feature as a complete second user feature, and the second user feature is stored in a user feature storage area of the settlement terminal for matching with the first user feature in the sales data.

Exemplarily, for the user whose face is occluded in the above unmanned supermarket, the third body posture feature is processed and expressed as [side standing code 3, arm angle value 120 and body proportion decimal 0.65], and the third clothing feature is expressed as [RGB value (0,0,0), hoodie code C03, white letter pattern vector [0.1,0.2,0.3,...] and cotton material code M01]. According to a concatenation rule that the body posture feature comes first, followed by the clothing feature, the system combines the data into a feature vector [3,120,0.65,(0,0,0),C03,[0.1,0.2,0.3,...],M01] as the second user feature, and the second user feature is stored and used to compare with the first user feature recorded previously so as to confirm the user identity and associate the sales data.

In this embodiment, when the facial feature cannot be extracted effectively, the body posture and clothing features are extracted and integrated to generate the second user feature, thereby providing a more comprehensive and reliable user identity confirmation method for the unmanned vending system in complex user scenarios, further completing the association process of the user shopping behavior and the settlement behavior, and improving the practicability and accuracy of the system under various conditions.

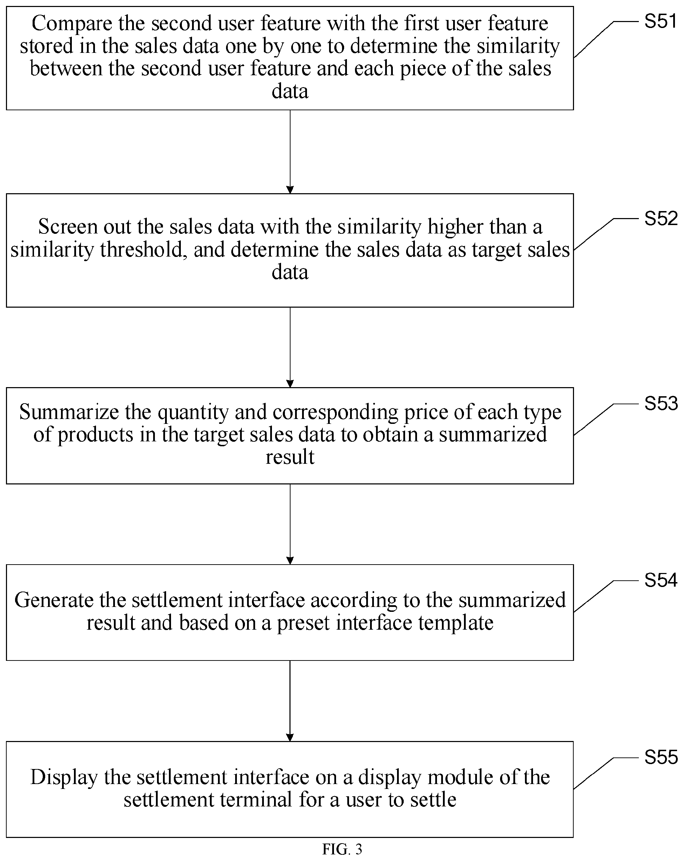

Based on any one of the above embodiments, in Embodiment 6 of the present application, referring to FIG. 3, Step S50 includes:
Step S51: the second user feature is compared with the first user feature stored in the sales data one by one to determine the similarity between the second user feature and each piece of the sales data.

In this embodiment, the second user feature is a data set extracted from the user image acquired by the settlement terminal and used to represent the current settlement user feature, and may include a facial feature point, a body posture feature, a clothing feature and other information. The stored sales data is generated and stored when a user takes away a product from the shelf, and includes a first user feature as well as the quantity of products, a product identifier and other information corresponding thereto. The first user feature is a user feature acquired and extracted by the image acquisition module of the shelf pusher when the user takes away a product. The similarity is a value for measuring the matching degree of the second user feature and the first user feature in each piece of the sales data, and is calculated by a preset algorithm. The higher the value is, the more similar the two feature sets are.

As an optional embodiment, the system reads second user feature data from the user feature storage area of the settlement terminal, and simultaneously invokes all stored sales data from a sales data storage database and the corresponding first user feature thereof. For the first user feature in each group of sales data, a cosine similarity algorithm is used for calculation. First, the second user feature and the first user feature are respectively converted into feature vectors, for example, the facial feature point coordinates, the body posture feature value and the clothing feature code are combined into a multi-dimensional vector. Then, a cosine value between the two vectors is calculated, and the cosine value is the similarity between the two vectors. For example, if the second user feature vector is A=[a1,a2,a3,...] and the first user feature vector is B=[b1,b2,b3,...], the similarity sim(A,B)=(A · B)/(∥A∥ • ∥B∥), where the A • B is a vector dot product, and ∥A∥ and ∥B∥ are the norms of vectors A and B, respectively.

Exemplarily, the second user feature vector acquired by the settlement terminal is [facial feature point value, side standing code 3, arm angle value 120, body proportion decimal 0.65, RGB value (0,0,0), hoodie code C03, white letter pattern vector [0.1,0.2,0.3,...] and cotton material code M01]. One group of first user feature vector invoked from the sales data storage database is [facial feature point value, side standing code 3, arm angle value 110, body proportion decimal 0.63, RGB value (0,0,0), hoodie code C03, white letter pattern vector [0.11,0.21,0.31,...] and cotton material code M01]. The similarity between the two vectors is calculated to be 0.92 by a cosine similarity algorithm.

Step S52: the sales data with the similarity higher than a similarity threshold is screened out, and the sales data is determined as target sales data.

In this embodiment, the similarity threshold is a preset value for determining whether the similarity between the second user feature and the first user feature is high enough so as to determine whether the corresponding sales data is relevant to the current settlement user. The threshold is usually adjusted according to the actual business requirement and a large amount of experimental data, for example, set to 0.8. The target sales data is sales data having a similarity with the current settlement user feature higher than the threshold after screening, and products corresponding to the data are considered to be products taken by the user and requiring settlement.

As an optional embodiment, the system traverses all the calculation results after the similarity between all the sales data and the second user feature is calculated. Each similarity value is compared with a preset similarity threshold. If the similarity is greater than the threshold, the corresponding sales data is marked as target sales data and stored in a temporary target sales data list. For example, if the similarity value is set to 0.8, and three groups of sales data have the similarities of 0.85, 0.92 and 0.78, respectively after calculation, two groups of sales data with the similarities of 0.85 and 0.92 are screened out, determined as the target sales data and added to the target sales data list.

Step S53: the quantity and corresponding price of each type of products in the target sales data are summarized to obtain a summarized result.

In this embodiment, the target sales data includes related information of the product taken by the user, such as the quantity of products and the product identifier, and the price information of the product can be associated through the product identifier. The summarized result is a result data set obtained by accumulating the quantities of various types of products in the target sales data and calculating the total price of the corresponding products, and used to subsequently generate a settlement interface.

As an optional embodiment, the system traverses the target sales data list. For each target sales data, the unit price of the product is queried from a product information database according to the product identifier in each target sales data. Then, the quantity of the products with the same product identifier is accumulated, and the total price of the products is calculated (total price=product quantity×unit price). Finally, the quantity, unit price and total price information of all different products is compiled into a summary table. For example, there are two records in the target sales data list. One is that the user takes away two bottles of spring water with the unit price of 3 yuan and the product identifier "P001", and the other is that the user takes away one bag of potato chips with the unit price of 5 yuan and the product identifier "P002". The system queries the product information database to obtain the unit prices of the spring water and the potato chips, the quantity of the spring water is 2 and the quantity of the potato chips is 1 after the product quantities are accumulated, and through calculation, the total price of the spring water is 6 yuan and the total price of the potato chips is 5 yuan.

Step S54: the settlement interface is generated according to the summarized result and based on a preset interface template.

In this embodiment, the preset interface template is a pre-designed page layout and style for displaying settlement information, including a product information display area, a total price display area and a payment mode selecting area, so as to provide a clear and convenient settlement operation interface for users. The settlement interface is a visual interface generated according to the summarized result and the preset interface template and used to display the information and total price of products required to be settled by the user and provide payment options.

As an optional embodiment, the system invokes a pre-stored interface template file, and the file may be in HTML, XML and other formats, which defines the layout structure and style of the settlement interface. The system fills the product information (product name, quantity, unit price and total price) in the summarized result into corresponding positions of the product information display area in the interface template; the total price of all the products is filled into the total price display area; meanwhile, preset payment mode options, such as WeChat Pay, Alipay and bank card payment, are added in the payment mode selecting area. For example, for the above summarized result, the system fills the related information of the spring water and the potato chips into table elements of the HTML template, fills the total price of 11 yuan into a div element displaying the total price, generates corresponding payment mode buttons in the payment mode selecting area, and generates a complete settlement interface HTML file.

Step S55: the settlement interface is displayed on a display module of the settlement terminal for a user to settle.

In this embodiment, a display module of the settlement terminal is a hardware device of the settlement terminal for displaying information to users, such as a liquid crystal display screen and a touchscreen. The generated settlement interface is displayed on the module, so that the user can intuitively see the product information requiring settlement and payment options so as to perform the subsequent settlement operation.

As an optional embodiment, a software system of the settlement terminal reads the generated settlement interface file (such as HTML file), and uses a built-in browser engine or a graphic rendering engine to parse and render the file into a visual interface. Then, the rendered settlement interface is output to the display module of the settlement terminal for display. After seeing the settlement interface including product list, total price and payment mode buttons on the display screen of the settlement terminal, the user can check the product information and select an appropriate payment mode to perform a settlement operation. For example, at the settlement terminal of a certain convenience store, the user sees the information of spring water and potato chips purchased by the user and the total price of 11 yuan clearly displayed on the display screen, and can enter the WeChat payment process by clicking a WeChat Pay button to complete settlement.

In this embodiment, through a series of feature comparison, data screening, summarization and interface generation and display operations, a complete process in the unmanned vending system from user feature matching to settlement interface display is achieved, thereby providing convenient and accurate settlement services for users and improving the user experience and operation efficiency of the unmanned vending system.

The present application provides a management device for a vending system. The management device for the vending system includes: at least one processor; and, a memory, in communication connection with the at least one processor, where the memory stores an instruction executable by the at least one processor, and the instruction is executed by the at least one processor, so that the at least one processor can perform the management method for the vending system in Embodiment 1.

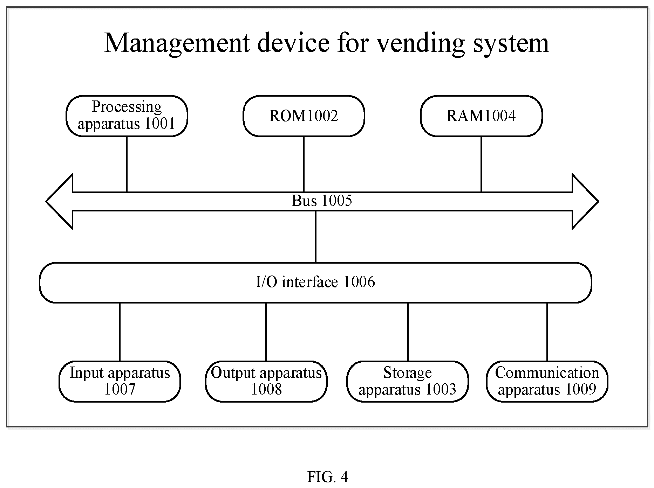

Referring to FIG. 4, it shows a schematic structural diagram of a management method for a vending system suitable for implementing the embodiment of the present application. The management device for the vending system according to the embodiment of the present application includes, but is not limited to, mobile terminals such as a mobile phone, a notebook computer, a digital broadcast receiver, a personal digital assistant (PDA), a portable application description: tablet computer (PAD), a portable media player (PMP), a vehicle-mounted terminal (such as a vehicle-mounted navigation terminal), and fixed terminals such as a digital TV and a desktop computer. The management device for the vending system shown in FIG. 4 is merely one example, and should not bring any limitation to the functions and application scope of the embodiment of the present application.

As shown in FIG. 4, the management device for the vending system may include a processing apparatus 1001 (such as a central processing unit and a graphics processing unit), which may perform various suitable actions and processing according to a program stored in a read only memory (ROM) 1002 or a program loaded to a random access memory (RAM) 1004 from a storage apparatus 1003. The RAM 1004 also stores various programs and data required for the operation of the management device for the vending system. The processing apparatus 1001, the ROM 1002 and the RAM 1004 are mutually connected through a bus 1005. An input/output (I/O) interface 1006 is also connected to the bus. Generally, the following system may be connected to the I/O interface 1006: an input apparatus 1007 including, for example, a touchscreen, a touchpad, a keyboard, a mouse, an image sensor, a microphone, an accelerometer and a gyroscope; an output apparatus 1008 including, for example, a liquid crystal display (LCD), a speaker and a vibrator; the storage apparatus 1003 including, for example, a tape and a hard disk; and a communication apparatus 1009. The communication apparatus 1009 may allow the management device for the vending system to perform wireless or wired communication with other devices to exchange data. Although the figure shows the management device for the vending system having various systems, it should be understood that it is not required to implement or have all of the shown systems. It may alternatively implement or have more or less systems.

Particularly, according to the embodiment of the present application, the processes described above with reference to the flowchart may be implemented as computer software programs. For example, the embodiment of the present application includes a computer program product, where the computer program product includes a computer program carried on a computer-readable medium, and the computer program includes a program code for performing the methods shown in the flowcharts. In this embodiment, the computer program may be downloaded and installed from a network through the communication apparatus, or be installed from the storage apparatus 1003, or be installed from the ROM 1002. When the computer program is executed by the processing apparatus 1001, the above-mentioned functions defined in the method according to the embodiment of the present application are performed.

The management device for the vending system provided by the present application uses the management method for the vending system, so that the technical problem that if a customer leaves the supermarket without settling, how many products the customer has failed to settle cannot be accurately known can be solved. Compared with the prior art, the beneficial effects of the management device for the vending system provided by the present application are the same as those of the management device for the vending system provided by the above embodiments. Moreover, other technical features in the management device for the vending system are identical to those disclosed in the method of the above embodiments, and thus will not be described in detail here.

It should be understood that various parts of the present application may be implemented by hardware, software, firmware or a combination thereof. In the description of the above embodiments, specific features, structures, materials or characteristics may be combined in any one or more of embodiments or examples in a suitable manner.

The above merely describes specific embodiments of the present application, but the protection scope of the present application is not limited thereto. Any person skilled in the art can easily conceive modifications or replacements within the technical scope of the present application, and these modifications or replacements shall fall within the protection scope of the present application. Therefore, the protection scope of the present application shall be subject to the protection scope of the appended claims.

The present application provides a computer-readable storage medium, having a computer-readable program instruction (that is, a computer program) stored thereon. The computer-readable program instruction is used to perform the management method for the vending system in the above embodiments.

The computer-readable storage medium provided by the present application may be, for example, a USB flash drive, but is not limited to, an electric, magnetic, optical, electromagnetic, infrared, or semiconductor system, system or device, or any combination of the above. A more specific example of the computer-readable storage medium may include, but is not limited to, electric connection with one or more wires, a portable computer disk, a hard disk, a random access memory (RAM), a read only memory (ROM), an erasable programmable read only memory (EPROM) or flash memory, an optical fiber, a portable CD-read only memory (CD-ROM), an optical storage device, a magnetic storage device, or any appropriate combination of the above. In this embodiment, the computer-readable storage medium may be any tangible medium including or storing a program, and the program may be used by or used in combination with an instruction execution system, system or device. The program code included in the computer-readable medium may be transmitted by any appropriate medium, including but not limited to: an electric wire, an optical cable, a radio frequency (RF) and the like, or any appropriate combination of the above.

The above computer-readable storage medium may be included in the management device for the vending system, or may be present singly and not be assembled in the management device for the vending system.

The computer-readable storage medium carries one or more programs. When being executed by the management device for the vending system, the one or more programs causes the management device for the vending system to: determine the quantity of products in response to a first step value of an encoder in the shelf pusher; acquire a first user feature that triggers the encoder based on an image acquisition module of the shelf pusher; encapsulate the quantity of products, the first user feature and a product identifier associated with the shelf pusher into sales data, and send the sales data to a settlement terminal; acquire a second user feature in response to a leaving target detected by a security door; and send alarm information if at least one target sales data associated with a user corresponding to the second user feature is unsettled.

The computer program code for performing the operations of the present application may be written in one or more programming languages or combinations thereof. The programming languages include object-oriented programming languages such as Java, Smalltalk, C++, and further include conventional procedural programming languages such as the "C" language or similar programming languages. The program code may be completely executed on a user computer, be partially executed on a user computer, be executed as an independent software package, be executed partially on a user computer and partially on a remote computer, or be completely executed on a remote computer or a server. In the case of a remote computer, the remote computer may be connected to the user computer through any type of network including a local area network (LAN) or a wide area network (WAN), or may be connected to an external computer (for example, via the Internet using an Internet service provider).

The flowcharts and block diagrams in the accompanying drawings illustrate system architectures, functions and operations, that may be implemented, of a system, a method and a computer program product according to various embodiments of the present application. Each block in a flowchart or a block diagram may represent a module, a program segment, or a part of code. The module, the program segment, or the part of code includes one or more executable instructions used for implementing specified logic functions. It should be noted that, in some alternative implementations, functions marked in the block may further occur in a different order than that marked in the accompanying drawings. For example, actually two blocks actually may be executed in substantially parallel, and sometimes they may be executed in a reverse order, depending on the functions involved. It should also be noted that each block in a block diagram and/or a flowchart and a combination of blocks in the block diagram and/or the flowchart may be implemented by using a dedicated hardware-based system configured to perform a specified function or operation, or may be implemented by using a combination of dedicated hardware and a computer instruction.

Related modules described in the embodiments of the present application may be implemented in a software manner, or may be implemented in a hardware manner. The names of the modules do not constitute a limitation on units themselves in certain circumstances.

The readable storage medium provided by the present application is a computer-readable storage medium, the computer-readable storage medium stores a computer-readable program instruction (that is, a computer program) for performing the management method for the vending system, and the technical problem that when a customer leaves the supermarket without settling, how many products the customer has failed to settle cannot be accurately known can be solved. Compared with the prior art, the beneficial effects of the computer-readable storage medium provided by the present application are the same as those of the management method for the vending system provided by the above embodiments, and thus will not be described in detail here.

The embodiment of the present application provides a computer program product, including a computer program. When the computer program is executed by a processor, the steps of the management method for the vending system are implemented.

The computer program product provided by the present application can solve the technical problem that when a customer leaves the supermarket without settling, how many products the customer has failed to settle cannot be accurately known. Compared with the prior art, the beneficial effects of the computer program product provided by the present application are the same as those of the management method for the vending system provided by the above embodiments, and thus will not be described in detail here.

The above are only the preferred embodiments of the present application and do not limit the patent scope of the present application. Any equivalent structure or equivalent process transformation made by the contents of the specification and the drawings of the present application, or directly or indirectly applied to other related technical fields, are equally included in the patent processing scope of the present application.

## Claims

1. A management method for a vending system, wherein the vending system comprises a shelf pusher and a settlement terminal, and the management method for the vending system comprises:
determining the quantity of products in response to a first step value of an encoder in the shelf pusher;
acquiring a first user feature that triggers the encoder based on an image acquisition module of the shelf pusher;
encapsulating the quantity of products, the first user feature and a product identifier associated with the shelf pusher into sales data, and sending the sales data to a settlement terminal;
acquiring a second user feature in response to a leaving target detected by a security door; and
sending alarm information if at least one target sales data associated with a user corresponding to the second user feature is unsettled.

2. The method according to claim 1, wherein the step of determining the quantity of products in response to the first step value of the encoder in the shelf pusher comprises:
establishing a corresponding relationship between an encoder step value and the quantity of products based on mechanical structure parameters of the shelf pusher, a product placement rule and an encoder precision; and
receiving the first step value of the encoder, and determining the quantity of products according to the corresponding relationship, wherein the quantity of products is calculated through linear interpolation if the first step value is between two adjacent step values.

3. The method according to claim 1, wherein the step of acquiring the first user feature that triggers the encoder based on the image acquisition module of the shelf pusher comprises:
sending a trigger signal to the image acquisition module if the first step value is detected;
receiving, by the image acquisition module, the trigger signal, performing image capture on a preset area of the shelf pusher, and determining an initial image, wherein the preset area is set as a range from which a user takes away products; and
extracting a user facial feature from the initial image to serve as the first user feature.

4. The method according to claim 3, wherein the vending system further comprises a general-purpose image acquisition apparatus, and after the step of extracting the user facial feature from the initial image to serve as the first user feature, the method comprises:
acquiring a first body posture feature and a first clothing feature if the user facial feature is missing;
invoking the general-purpose image acquisition apparatus to acquire a second body posture feature and a second clothing feature of the preset area; and
concatenating the first body posture feature, the first clothing feature, the second body posture feature and the second clothing feature into the first user feature.

5. The method according to claim 1, wherein the step of encapsulating the quantity of products, the first user feature and the product identifier associated with the shelf pusher into the sales data, and sending the sales data to the settlement terminal comprises:
associating the quantity of products and the product identifier as product data according to a preset data format;
concatenating the product data and the first user feature as a data body of the sales data;
adding a data header comprising a data type and a timestamp to the data body; and
sending the encapsulated sales data to the settlement terminal through a communication module.

6. The method according to claim 1, after the step of encapsulating the quantity of products, the first user feature and the product identifier associated with the shelf pusher into the sales data, and sending the sales data to the settlement terminal, comprising:
acquiring a second user feature in response to a trigger operation of the settlement terminal; and
generating and displaying a settlement interface for a user to settle based on at least one target sales data matched with the second user feature, wherein the step of acquiring the second user feature in response to the trigger operation of the settlement terminal comprises:
invoking a feature acquisition module of the settlement terminal if detecting a user trigger operation by the settlement terminal;
performing image acquisition on a settlement area based on the feature acquisition module to acquire a user image; and
extracting a user facial feature point based on the user image to generate the second user feature.

7. The method according to claim 6, after the step of extracting the user facial feature point based on the user image to generate the second user feature, comprising:
extracting a third body posture feature and a third clothing feature if a face corresponding to the user image is occluded or blurred; and
concatenating the third body posture feature and the third clothing feature into the second user feature.

8. The method according to claim 1, wherein the step of generating and displaying the settlement interface for the user to settle based on the at least one target sales data matched with the second user feature comprises:
comparing the second user feature with the first user feature stored in the sales data one by one to determine the similarity between the second user feature and each piece of the sales data;
screening out the sales data with the similarity higher than a similarity threshold, and determining the sales data as target sales data;
summarizing the quantity and corresponding price of each type of products in the target sales data to obtain a summarized result;
generating the settlement interface according to the summarized result and based on a preset interface template; and
displaying the settlement interface on a display module of the settlement terminal for a user to settle.

9. A management device for a vending system, comprising: a memory, a processor, and a computer program stored in the memory and capable of running on the processor, wherein the processor is configured to invoke the computer program stored in the memory to execute the steps of the management method for a vending system according to any one of claims 1 to 8.

10. A storage medium, wherein the storage medium is a computer-readable storage medium, the computer-readable storage medium stores a computer program, and when the computer program is executed by a processor, the steps of the management method for a vending system according to any one of claims 1 to 8 are implemented.
